# EUROPEAN PATENT APPLICATION

(11) **EP 4 738 065 A1**
(43) Date of publication of application: **06.05.2026**
(21) Application number: 25207125.3
(22) Date of filing: 07.10.2025
(51) Int. Cl.: G06F 1/3215, G06F 1/3218, G06F 3/0354, G06F 3/038

(54) **INFORMATION PROCESSING APPARATUS AND CONTROL METHOD**

(30) Priority: 30.10.2024 JP 2024190774
(71) Applicant: Lenovo (Singapore) Pte. Ltd., New Tech Park 556741 (SG)
(72) Inventor: NAKAMURA, Atsunobu, Yokohama-shi, 220-0012 (JP); CHONAN, Tsutomu, Yokohama-shi, 220-0012 (JP); ODA, Hiroki, Yokohama-shi, 220-0012 (JP); KAMIMURA, Takuroh, Yokohama-shi, 220-0012 (JP)
(74) Representative: Openshaw & Co.

(57) **Abstract**

To enable operation in an appropriate state in which a balance between performance and power consumption is achieved.

An information processing apparatus includes an input unit configured to receive input from a user, a main control unit configured to execute information processing such that a set limit value of power consumption is not exceeded, an input delay detection unit configured to detect a delay time from the input received by the input unit to output to a display unit, and a power control unit configured to control the limit value of the power consumption such that the delay time falls within a predetermined range according to the delay time detected by the input delay detection unit.

## Description

### BACKGROUND OF THE INVENTION

### Field of the Invention

The present invention relates to an information processing apparatus and a control method.

### Description of the Related Art

In an information processing apparatus such as a personal computer (PC), in a case where performance is emphasized, performance per watt (Perf/Watt) efficiency deteriorates, and problems such as wasteful power consumption, noise of a heat dissipation fan, and an increase in temperature of a chassis may occur. In order to solve such a problem, in recent years, an attempt has been made to operate an information processing apparatus by providing a power limit to balance between performance and power consumption (for example, refer to Japanese Patent No. 7521065).

### SUMMARY OF THE INVENTION

However, in the information processing apparatus, for example, since various tasks are processed and the operating state is constantly changed, it is difficult for the information processing apparatus in the related art to operate the information processing apparatus in an appropriate state in which a balance between performance and power consumption is achieved.

The present invention has been made in order to solve the above-described problem, and an object of the present invention is to provide an information processing apparatus and a control method that can operate in an appropriate state in which a balance between performance and power consumption is achieved.

In order to solve the above problem, an information processing apparatus according to a first aspect of the present invention includes: an input unit configured to receive input from a user; a main control unit configured to execute information processing such that a set limit value of power consumption is not exceeded; an input delay detection unit configured to detect a delay time from the input received by the input unit to output to a display unit; and a power control unit configured to control the limit value of the power consumption such that the delay time falls within a predetermined range according to the delay time detected by the input delay detection unit.

In addition, in the information processing apparatus according to the first aspect, the limit value of the power consumption may be settable in a plurality of stages, and the power control unit may be configured to change the stage of the limit value of the power consumption according to the delay time and control the limit value of the power consumption.

In addition, in the information processing apparatus according to the first aspect, the power control unit may be configured to change the stage in a direction of decreasing the limit value of the power consumption in a case where the delay time is faster than the predetermined range, and change the stage in a direction of increasing the limit value of the power consumption in a case where the delay time is slower than the predetermined range.

In addition, in the information processing apparatus according to the first aspect, the power control unit may be configured to change the number of stages to be changed according to a degree to which the delay time is out of the predetermined range.

In addition, in the information processing apparatus according to the first aspect, the input delay detection unit may be configured to detect the delay time for each second by using a User Input Delay function of an operating system (OS) that detects the delay time.

A control method of an information processing apparatus according to a second aspect of the present invention, the information processing apparatus including an input unit configured to receive input from a user and a main control unit configured to execute information processing such that a set limit value of power consumption is not exceeded, the control method includes: an input delay detection step of detecting a delay time from the input received by the input unit to output to a display unit, by an input delay detection unit; and a power control step of controlling the limit value of the power consumption such that the delay time falls within a predetermined range according to the delay time detected in the input delay detection step, by a power control unit.

The above-described aspects of the present invention enable operation in an appropriate state in which a balance between performance and power consumption is achieved.

### BRIEF DESCRIPTION OF THE DRAWINGS

FIG. 1 is a block diagram illustrating an example of a main hardware configuration of a laptop PC according to the present embodiment.
FIG. 2 is a functional block diagram illustrating an example of a functional configuration of the laptop PC according to the present embodiment.
FIG. 3 is a diagram illustrating a principle of power control of the laptop PC according to the present embodiment.
FIG. 4 is a diagram illustrating a concept of power control of the laptop PC according to the present embodiment.
FIG. 5 is a flowchart illustrating an example of an operation of the laptop PC according to the present embodiment.
FIG. 6 is a first diagram illustrating an example of the operation of the laptop PC according to the present embodiment.
FIG. 7 is a second diagram illustrating an example of the operation of the laptop PC according to the present embodiment.
FIG. 8 is a diagram illustrating an effect of the laptop PC according to the present embodiment.

### DETAILED DESCRIPTION OF THE INVENTION

In the following, an information processing apparatus and a control method according to an embodiment of the present invention will be described with reference to the drawings.

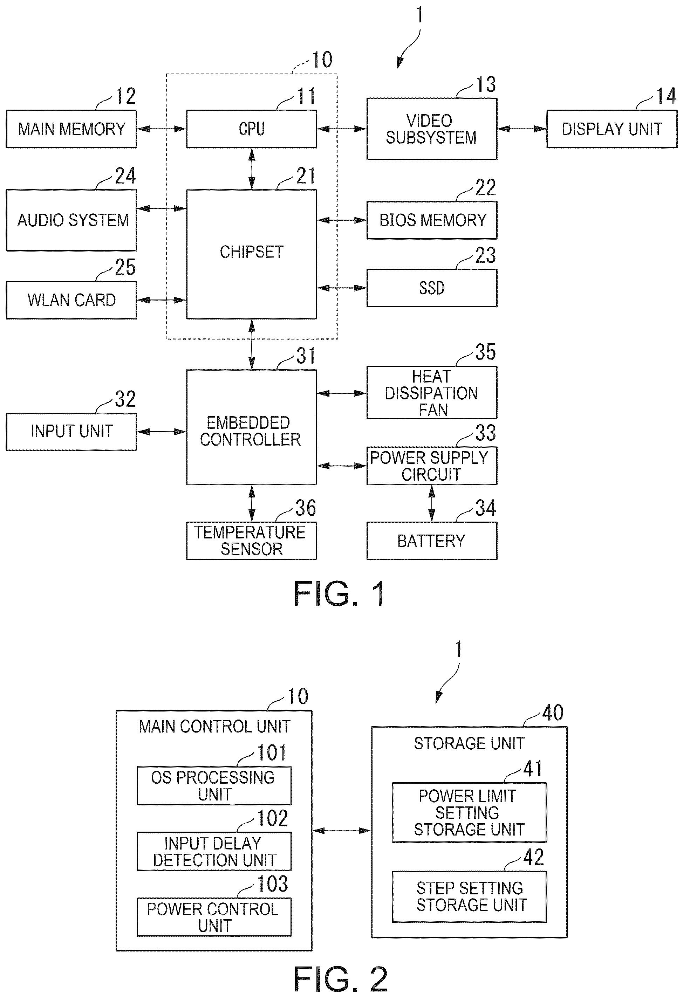

FIG. 1 is a diagram illustrating an example of a main hardware configuration of a laptop PC 1 according to the present embodiment.

As illustrated in FIG. 1, the laptop PC 1 (notebook personal computer) includes a CPU 11, a main memory 12, a video subsystem 13, a display unit 14, a chipset 21, a BIOS memory 22, an SSD 23, an audio system 24, a WLAN card 25, an embedded controller 31, an input unit 32, a power supply circuit 33, a battery 34, a heat dissipation fan 35, and a temperature sensor 36. In the present embodiment, a case where the information processing apparatus is the laptop PC 1 will be described as an example of the information processing apparatus.

The central processing unit (CPU) 11 executes various types of computing processing under program control and controls the entire laptop PC 1.

The main memory 12 is a writable memory used as a read area for an execution program of the CPU 11 or as a work area for writing processing data of the execution program. The main memory 12 is configured with, for example, a plurality of dynamic random access memory (DRAM) chips. The execution program includes an operating system (OS), various drivers for operating hardware such as peripheral devices, various services/utilities, an application program, and the like.

The video subsystem 13 is a subsystem for realizing a function related to image display and includes a video controller. This video controller processes a drawing instruction from the CPU 11, writes the processed drawing information to a video memory, reads the drawing information from the video memory, and outputs the drawing information as drawing data (display data) to the display unit 14.

The display unit 14 is, for example, a liquid crystal display, and displays a display screen based on the drawing data (display data) output from the video subsystem 13.

The chipset 21 includes a controller such as a universal serial bus (USB), a serial AT attachment (ATA), a serial peripheral interface (SPI) bus, a peripheral component interconnect (PCI) bus, a PCI-express bus (PCIe bus), a low pin count (LPC) bus, and a plurality of devices are connected to the chipset 21. In FIG. 1, as an example of the device, the BIOS memory 22 and the SSD 23 are connected to the chipset 21.

The basic input output system (BIOS) memory 22 is configured with, for example, an electrically rewritable non-volatile memory such as an electrically erasable programmable read only memory (EEPROM) or a flash ROM (flash memory). The BIOS memory 22 stores, for example, a BIOS, system firmware for controlling the embedded controller 31, and the like.

The solid state drive (SSD) 23 (an example of a non-volatile storage device) stores the OS, various drivers, various services/utilities, an application program, and various types of data.

The audio system 24 is configured to record, play back, and output audio data.

The wireless local area network (WLAN) card 25 is connected to a network via a wireless LAN to perform data communication.

The embedded controller 31 is a one-chip microcomputer that monitors and controls various devices (peripheral devices, sensors, and the like) regardless of a system state of the laptop PC 1. In addition, the embedded controller 31 has a power supply management function of controlling the power supply circuit 33. The embedded controller 31 is composed of a CPU, a ROM, a RAM, and the like (not illustrated), and includes A/D input terminals of a plurality of channels, D/A output terminals, a timer, and digital input and output terminals. For example, the input unit 32, the power supply circuit 33, the heat dissipation fan 35, and the temperature sensor 36 are connected to the embedded controller 31 via the input and output terminals, and the embedded controller 31 controls the operations of these.

In addition, the embedded controller 31 may control power consumption by controlling the change of the operating frequency, the average processing speed, and the like of the CPU 11 via the chipset 21.

The input unit 32 is, for example, an input device such as a keyboard, a touch pad, or a mouse, and receives input from a user. The input unit 32 detects, for example, an operation of the user as input, and outputs an operation signal corresponding to the detected operation to the embedded controller 31. The input unit 32 may be configured as a touch sensor disposed to overlap the display unit 14.

The power supply circuit 33 includes, for example, a DC/DC converter, a charging and discharging unit, an AC/DC adapter, and the like. For example, the power supply circuit 33 converts a direct current voltage supplied from an external power supply such as an AC adapter (not illustrated) or the battery 34 into a plurality of voltages required for operating the laptop PC 1. In addition, the power supply circuit 33 supplies power to each unit of the laptop PC 1 under the control of the embedded controller 31.

The battery 34 is a secondary battery such as a lithium-ion battery, for example. The battery 34 is charged via the power supply circuit 33 in a case where power is supplied to the laptop PC 1 from the external power supply. In addition, in a case where power is not supplied to the laptop PC 1 from the external power supply, the battery 34 outputs the accumulated power as operation power of the laptop PC 1 via the power supply circuit 33.

The heat dissipation fan 35 is installed in the chassis (not illustrated) of the laptop PC 1 and cools members stored in the chassis. The heat dissipation fan 35 mainly dissipates heat generated from a member having a large amount of heat generation, such as the CPU 11. The heat dissipation fan 35 rotates fins to take in air into the chassis and exchanges heat with the taken-in air and the members installed inside the chassis. Air whose temperature has increased due to heat exchange is discharged to the outside of the chassis. The operation of the heat dissipation fan 35 is controlled by, for example, the embedded controller 31.

The temperature sensor 36 is provided inside the chassis of the laptop PC 1 and detects a temperature at a position thereof. The temperature sensor 36 is placed at a position within a predetermined distance from a high heat-generating device, such as the CPU 11. The temperature sensor 36 outputs a temperature signal indicating the detected temperature to the embedded controller 31. The embedded controller 31 controls the operation of the heat dissipation fan 35 based on the temperature indicated by the temperature signal input from the temperature sensor 36.

The CPU 11 and the chipset 21 described above are, for example, processors, and correspond to a main control unit 10 in the present embodiment. In addition, the main control unit 10 is an example of a processor (main processor) that executes a program stored in a memory (main memory 12).

Generally, power consumption in the CPU 11 and the chipset 21 (main control unit 10) is variable. The main control unit 10 has a mechanism that controls one or both of an operation voltage and an operating frequency according to the power consumption. For example, the main control unit 10 executes the system firmware and sets the maximum allowable operating frequency, which is permitted in accordance with the operating state (operation mode) or the power control mode of the main system of the laptop PC 1, to the register of the own device. The main system is a computer system including hardware such as the CPU 11, the chipset 21, and the main memory 12, and software such as an OS and a schedule task. The device that constitutes the main system corresponds to the system device. The main control unit 10 forms the core of the system device.

The main control unit 10 executes the BIOS and cooperates with other system devices to control data input and output by each system device. The main control unit 10 executes the OS in cooperation with the main memory 12 or other devices and provides basic functions of the laptop PC 1. The basic functions include, for example, management and control of execution states of various applications and other programs, provision of a standard interface in execution of the programs, management of resources in the main system and hardware that cooperates with the main system directly or indirectly, and the like.

Generally, the power consumption of the processor increases as the operating frequency increases. A lower limit and an upper limit of the operating frequency are set in the processor. For example, the processor can set, in advance, a function or a control table indicating a relationship with power consumption for each operating frequency, and can determine the operating frequency corresponding to the target power consumption with reference to the relationship. By setting the operating frequency to the lower limit, the minimum processing capacity is ensured. By setting the operating frequency to the upper limit, the processing capacity is maximized. This relationship can be associated with an operation mode and a power control parameter as will be described later.

Generally, the processor generates more heat because the power consumption increases as the operating frequency or utilization increases. The processor is configured to operate such that the power consumption is equal to or less than the set maximum power consumption by setting an operating frequency corresponding to the power consumption equal to or less than the allowed maximum power consumption. Therefore, as the operating frequency decreases, the power consumption decreases, and the execution time of the process increases. In addition, the OS allocates computing resources such as memory and power consumption to individual processes, in order to enable simultaneous execution of processing of a plurality of processes. The execution time depends on the presence or absence or the number of other processes that are simultaneously executed, and the processing instructed in each individual process. Therefore, the responsiveness of the main control unit 10 depends on the operating state at each time and affects the user experience (UX).

Next, a functional configuration of the laptop PC 1 according to the present embodiment will be described with reference to FIG. 2. FIG. 2 is a block diagram illustrating an example of the functional configuration of the laptop PC 1 according to the present embodiment. As illustrated in FIG. 2, the laptop PC 1 includes the main control unit 10 and a storage unit 40. In FIG. 2, only the main functional configuration related to the invention of the present embodiment is described.

The storage unit 40 is, for example, a storage unit implemented by the main memory 12, the SSD 23, or the like, and stores various types of information used by the laptop PC 1. The storage unit 40 stores, for example, various types of information used for BIOS processing and OS processing, and various types of information used for power control processing. The storage unit 40 includes a power limit setting storage unit 41 and a step setting storage unit 42.

The power limit setting storage unit 41 is a storage unit implemented by, for example, the main memory 12, and stores setting information related to the power control that is currently set. The power limit setting storage unit 41 stores, for example, a step (a stage, a level, or the like) indicating an operation mode described later and a power control parameter (for example, a power limit (PL), a lower limit and an upper limit of the operating frequency, and the like).

The step setting storage unit 42 is a storage unit implemented by, for example, the main memory 12 or the SSD 23, and stores a plurality of stages (steps) and values of the power control parameters corresponding to each step in association with each other. In the present embodiment, for example, a five-stage step is provided, and an example of changing a value of a power limit (for example, PL1: Power Limit 1) as the power control parameter will be described.

| |
|---|
| Step 5 (LV5): PL1 = PL15 |
| Step 4 (LV4): PL1 = PL14 |
| Step 3 (LV3): PL1 = PL13 |
| Step 2 (LV2): PL1 = PL12 |
| Step 1 (LV1): PL1 = PL11 |

Step 5 (LV5) is an operation mode in which the power limit value (limit value of the power consumption) is the largest, and Step 1 (LV1) is an operation mode in which the power limit value is the smallest. (PL15 > PL14 > PL13 > PL12 > PL11).

Furthermore, Power Limit 1 (PL1) corresponds to a limit value of the rated power.

The main control unit 10 is a functional unit that is realized by causing the CPU 11 to execute programs stored in the BIOS memory 22, the SSD 23, the main memory 12, and the like. The main control unit 10 executes processing based on the OS and the BIOS. The main control unit 10 can execute information processing so that the set limit value (power limit value) of the power consumption is not exceeded. The main control unit 10 includes, for example, an OS processing unit 101, an input delay detection unit 102, and a power control unit 103.

The OS processing unit 101 is, for example, a functional unit that is realized by causing the CPU 11 to execute programs of the OS stored in the SSD 23 and the main memory 12, and executes processing based on the OS. The OS processing unit 101 has a function of detecting a delay time from the input received by the input unit 32 to the output to the display unit 14, and has a function of "User Input Delay" of detecting the delay time by using the OS (for example, Windows (registered trademark)).

The input delay detection unit 102 is a functional unit that is realized by causing the CPU 11 to execute a driver program stored in the SSD 23 and the main memory 12, and corresponds to, for example, a driver (device driver) added to the OS. The input delay detection unit 102 detects a delay time (input-output time) from the input received by the input unit 32 to the output to the display unit 14. The input delay detection unit 102 detects a delay time (input-output time) for each second by using, for example, the function of "User Input Delay" of the OS described above.

The power control unit 103 is a functional unit that is realized by causing the CPU 11 to execute driver programs stored in the SSD 23 and the main memory 12, and corresponds to, for example, a driver (device driver) added to the OS. The power control unit 103 controls a limit value (power limit value) of the power consumption such that the delay time falls within a predetermined range according to the delay time (input-output time) detected by the input delay detection unit 102. Here, a predetermined range is set to, for example, a range in which a balance between the performance and the power consumption is achieved.

For example, in a case where the delay time (input-output time) is slower (longer) than the predetermined range, the power control unit 103 performs control to increase the limit value (power limit value) of the power consumption. In addition, in a case where the delay time (input-output time) is faster (shorter) than the predetermined range, the power control unit 103 performs control to reduce the limit value of the power consumption (power limit value), for example.

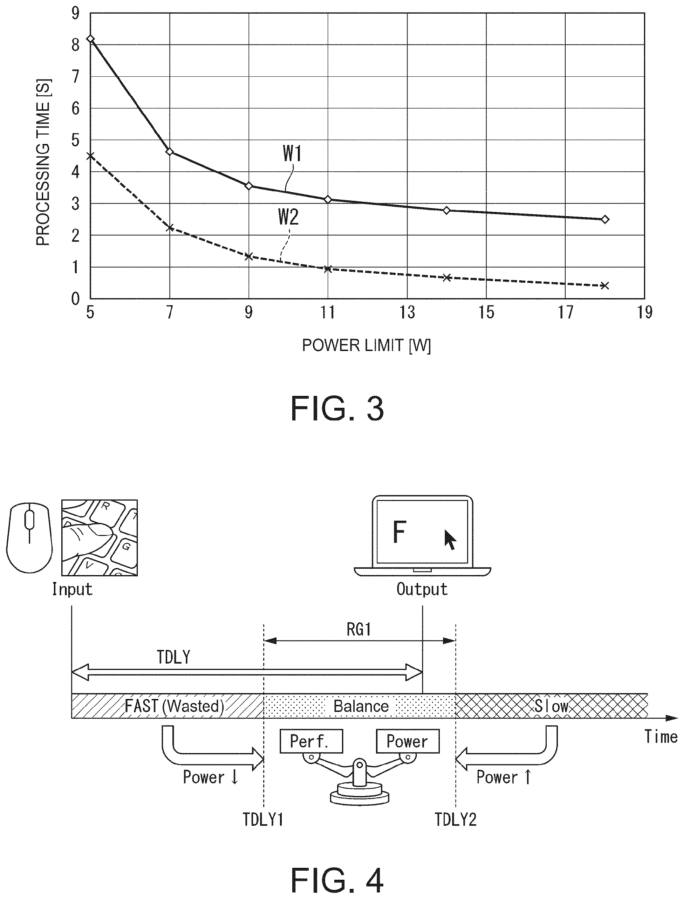

Here, the concept of power control of the laptop PC 1 according to the present embodiment will be described with reference to FIGS. 3 and 4.

FIG. 3 is a diagram illustrating a principle of power control of the laptop PC 1 according to the present embodiment.

In the graph illustrated in FIG. 3, a horizontal axis indicates a value of a power limit [W (watt)], and a vertical axis indicates a processing time [S (second)].

In addition, a waveform W1 is a waveform illustrating a relationship between the value of the power limit and a task completion time. In addition, a waveform W2 is a waveform illustrating a relationship between the value of the power limit and an average value (input-output time) of the "User Input Delay".

As illustrated in FIG. 3, the task completion time of the waveform W1 and the input-output time of the waveform W2 have the same tendency, and it is considered that there is a correlation (proportional relationship) between the task completion time and the input-output time. Therefore, based on this relationship, the input-output time can be used as a substitute for the task completion time.

In addition, FIG. 4 is a diagram illustrating a concept of power control of the laptop PC 1 according to the present embodiment. In FIG. 3, a horizontal axis of the drawing indicates time, and an input-output time TDLY indicates a delay time from the input received by the input unit 32, such as a mouse or a keyboard, to the output by the display unit 14 in response to the input.

In addition, the region where the input-output time TDLY is earlier than time TDLY1 is a "Fast (wasted)" region in which the processing speed is fast and power is consumed wastefully. In addition, a region where the input-output time TDLY is from the time TDLY1 to the time TDLY2 is a "balance" region, and is an optimal region where the performance and the power consumption of the laptop PC 1 are balanced. In addition, a region where the input-output time TDLY is later than the time TDLY2 is a "SLOW" region, which is a region with a slow processing speed and insufficient performance.

Here, the "balance" region from the time TDLY1 to the time TDLY2 corresponds to the predetermined range described above (threshold value range RG1). In the present embodiment, in a case where the power limit value (limit value of the power consumption) is controlled to fall within the "balance" region from the time TDLY1 to the time TDLY2 illustrated in FIG. 4, an optimal operating state in which the performance and the power consumption are balanced can be obtained.

That is, the power control unit 103 performs control to reduce the power limit value such that the input-output time TDLY is in the "balance" region (threshold value range RG1) in a case where the input-output time TDLY is in the "Fast (wasted)" region. In addition, the power control unit 103 performs control to increase the power limit value such that the input-output time TDLY is in the "balance" region (threshold value range RG1) in a case where the input-output time TDLY is in the "SLOW" region.

Returning to the description of FIG. 3, specifically, the limit value of the power consumption is set in a plurality of stages (five stages) as described above, and the power control unit 103 changes the step (stage) of the limit value of the power consumption according to the delay time (input-output time) to control the limit value of the power consumption. The power control unit 103 controls the limit value of the power consumption by changing, as the power control parameter, for example, PL1, which is the limit value of the rated power of the processor constituting the main control unit 10.

For example, in a case where the delay time (input-output time) is faster than the predetermined range (threshold value range RG1) (in a case where the delay time is smaller than a lower limit value of the threshold value range RG1), the power control unit 103 changes the step (stage) in a direction of decreasing the limit value of the power consumption (for example, the value of PL1). In addition, for example, in a case where the delay time (input-output time) is slower than the predetermined range (threshold value range RG1) (in a case where the delay time is larger than an upper limit value of the threshold value range RG1), the power control unit 103 changes the step (stage) in a direction of increasing the limit value of the power consumption (for example, the value of PL1).

In a case where the step (stage) is changed, the power control unit 103 acquires the power control parameter corresponding to the step to be changed from the step setting storage unit 42, and sets the power control parameter in the register of the main control unit 10 to change the step. In addition, the power control unit 103 associates the changed step with the power control parameter and stores them as setting information of the current step in the power limit setting storage unit 41.

Next, the operation of the laptop PC 1 according to the present embodiment will be described with reference to the drawings.

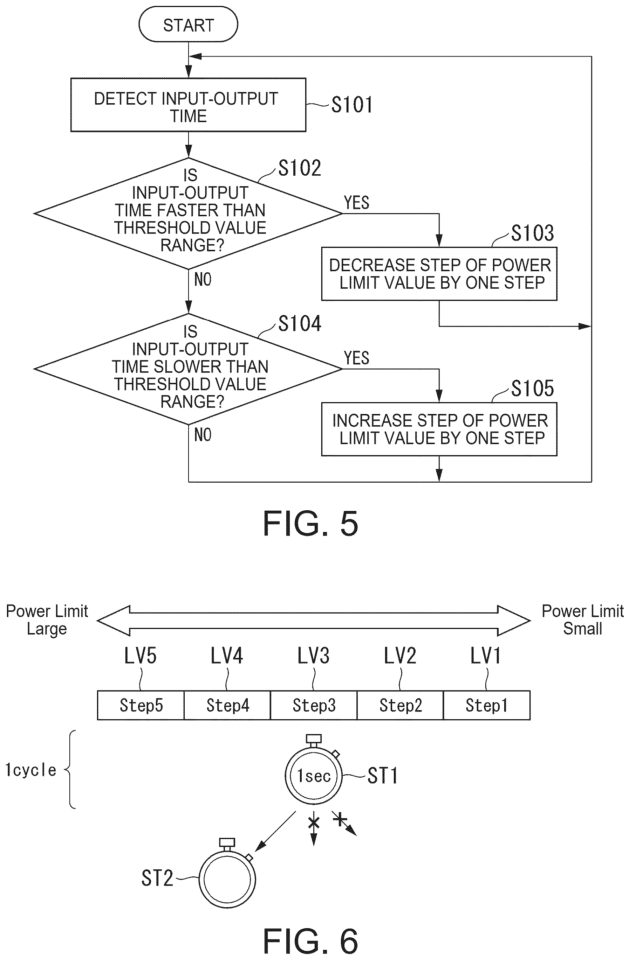

FIG. 5 is a flowchart illustrating an example of an operation of the laptop PC 1 according to the present embodiment.

As illustrated in FIG. 5, first, the main control unit 10 of the laptop PC 1 detects the input-output time (Step S101). The input delay detection unit 102 of the main control unit 10 detects, for example, an input-output time for each second by using the function of "User Input Delay" of the OS processing unit 101.

Next, the power control unit 103 of the main control unit 10 determines whether or not the input-output time is faster than a threshold value range (an example of a predetermined range) (Step S102). The power control unit 103 determines whether or not, for example, the input-output time TDLY illustrated in FIG. 4 is faster than the threshold value range (for example, the threshold value range RG1 (range of TDLY1 to TDLY2)). In a case where the input-output time is faster than the threshold value range (Yes in Step S102), the power control unit 103 proceeds the processing to Step S103. In addition, in a case where the input-output time is not earlier than the threshold value range (No in Step S102), the power control unit 103 proceeds the processing to Step S104.

In Step S103, the power control unit 103 decreases the step of the power limit value by one step. The power control unit 103 acquires the current step information from the power limit setting storage unit 41 and acquires the step information one stage lower than the current step from the step setting storage unit 42. The power control unit 103 changes the step by setting the power control parameter corresponding to the step to be changed, which is acquired from the step setting storage unit 42, in the register of the main control unit 10. In addition, the power control unit 103 associates the changed step with the power control parameter and stores them in the power limit setting storage unit 41 as setting information (step information) of the current step. After the processing of Step S103, the power control unit 103 returns the processing to Step S101.

In addition, in Step S104, the power control unit 103 determines whether or not the input-output time is slower than the threshold value range. The power control unit 103 determines, for example, whether or not the input-output time TDLY illustrated in FIG. 4 is slower than the threshold value range (for example, a threshold value range RG1 (range of TDLY1 to TDLY2)). In a case where the input-output time is slower than the threshold value range (Yes in Step S104), the power control unit 103 proceeds the processing to Step S105. In addition, in a case where the input-output time is not slower than the threshold value range (No in Step S104), the power control unit 103 returns the processing to Step S101.

In Step S105, the power control unit 103 acquires the current step information from the power limit setting storage unit 41 and acquires the step information that is one stage higher than the current step from the step setting storage unit 42. The power control unit 103 changes the step by setting the power control parameter corresponding to the step to be changed, which is acquired from the step setting storage unit 42, in the register of the main control unit 10. In addition, the power control unit 103 associates the changed step with the power control parameter and stores them in the power limit setting storage unit 41 as setting information (step information) of the current step. After the processing of Step S105, the power control unit 103 returns the processing to Step S101.

In a case where the input-output time is within the threshold value range, the power control unit 103 maintains the currently set step (stage) as it is.

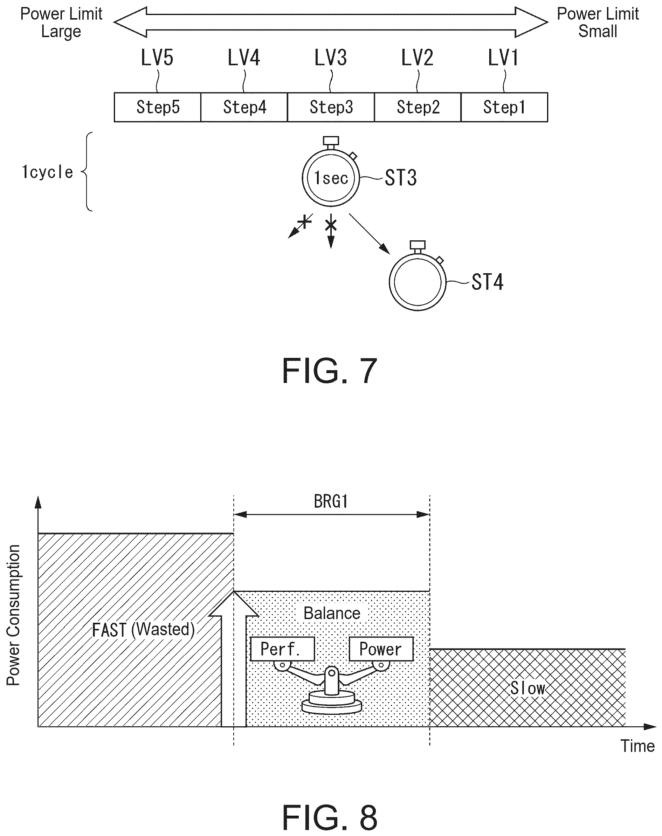

Next, a specific example of the processing described in the flowchart illustrated in FIG. 5 will be described with reference to FIGS. 6 and 7.

FIG. 6 is a first diagram illustrating an example of the operation of the laptop PC 1 according to the present embodiment.

The example illustrated in FIG. 6 illustrates an example of power control in a case where the input-output time is slower than the threshold value range RG1.

In FIG. 6, the step is set in five stages of "Step 1" (LV1) to "Step 5" (LV5). In addition, in the current operating state ST1, the step of the operation mode is set to "Step 3" (LV3).

In the operating state ST1 of "Step 3" (LV3), in a case where the input-output time detected by the input delay detection unit 102 is slower than the threshold value range RG1, the power control unit 103 changes the step to "Step 4" (LV4), which has a power limit value one stage higher, and transitions to an operating state ST2.

In addition, FIG. 7 is a second diagram illustrating an example of the operation of the laptop PC 1 according to the present embodiment.

The example illustrated in FIG. 7 illustrates an example of power control in a case where the input-output time is faster than the threshold value range RG1.

In FIG. 7, similarly to FIG. 6, the step is set in five stages of "Step 1" (LV1) to "Step 5" (LV5). In addition, in the current operating state ST3, the step of the operation mode is set to "Step 3" (LV3).

In the operating state ST3 of "Step 3" (LV3), in a case where the input-output time detected by the input delay detection unit 102 is faster than the threshold value range RG1, the power control unit 103 changes the step to "Step 2" (LV2), which has a power limit value one stage lower and transitions to an operating state ST4.

As described above, the laptop PC 1 (information processing apparatus) according to the present embodiment includes the input unit 32, the main control unit 10, the input delay detection unit 102, and the power control unit 103. The input unit 32 receives input from a user. The main control unit 10 can execute the information processing so that the set limit value of the power consumption is not exceeded. The input delay detection unit 102 detects the delay time (for example, the input-output time) from the input received by the input unit 32 to the output to the display unit 14. The power control unit 103 controls the limit value of the power consumption (power limit value) such that the delay time falls within a predetermined range (within a threshold value range RG1) according to the delay time (for example, the input-output time) detected by the input delay detection unit 102.

As a result, in the laptop PC 1 (information processing apparatus) according to the present embodiment, as illustrated in FIG. 3 described above, since there is a correlation between the delay time (for example, the input-output time) detected by the input delay detection unit 102 and the task completion time, the operating state of the laptop PC 1 can be appropriately detected by using the delay time (for example, the input-output time). Therefore, the laptop PC 1 (information processing apparatus) according to the present embodiment can be operated in an appropriate state (for example, a state of a range BRG1 in FIG. 8) in which a balance between the performance and the power consumption is achieved by controlling the limit value of the power consumption (power limit value) such that the delay time falls within the predetermined range (within the threshold value range RG1) in accordance with the delay time (for example, the input-output time).

FIG. 8 is a diagram illustrating an effect of the laptop PC 1 according to the present embodiment.

In FIG. 8, a horizontal axis indicates a processing time of the application (corresponding to a task completion time), and a vertical axis indicates power consumption. In addition, the range BRG1 indicates an optimal operating range in which a balance between the performance and the power consumption is achieved.

As illustrated in FIG. 8, the laptop PC 1 (information processing apparatus) according to the present embodiment can be easily operated in an appropriate state in which a balance between performance and power consumption is achieved by using the delay time (for example, the input-output time). In addition, in the laptop PC 1 (information processing apparatus) according to the present embodiment, for example, it is not necessary to detect the operating state by, for example, the dummy task processing, and it is possible to quickly change the limit value of the power consumption (power limit value) immediately after the input-output time is detected. Therefore, it is possible to quickly respond to the change in the operating state and realize an appropriate state in which a balance between the performance and the power consumption is achieved.

In addition, in the present embodiment, the limit value of the power consumption (power limit value) can be set in a plurality of stages (a plurality of steps). The power control unit 103 changes a stage of the limit value of the power consumption (step of the power limit value) according to the delay time (input-output time) to control the limit value of the power consumption (power limit value).

Accordingly, the laptop PC 1 according to the present embodiment changes the stage of the limit value of the power consumption (step of the power limit value) to control the limit value of the power consumption (power limit value). Therefore, the limit value of the power consumption (power limit value) can be easily controlled, and the laptop PC 1 can be operated in an appropriate state in which a balance between the performance and the power consumption is achieved through simpler processing.

In addition, in the present embodiment, in a case where the delay time (input-output time) is faster than the predetermined range (threshold value range RG1), the power control unit 103 changes the step (stage) in a direction of decreasing the limit value of the power consumption (power limit value). In a case where the delay time (input-output time) is slower than the predetermined range (threshold value range RG1), the power control unit 103 changes the step (stage) in a direction of increasing the limit value of the power consumption (power limit value).

Accordingly, the laptop PC 1 according to the present embodiment changes the limit value of the power consumption (power limit value) in units of steps (stages), thereby further shortening the processing time for controlling the limit value of the power consumption (power limit value) and enabling quick response to the change in the operating state.

In addition, in the present embodiment, the power control unit 103 may change the number of step stages to be changed according to a degree of deviation of the delay time outside the predetermined range (outside the threshold value range RG1) (deviation degree).

As a result, in the laptop PC 1 according to the present embodiment, for example, in a case where the deviation of the delay time (input-output time) from the predetermined range (threshold value range RG1) is large, a plurality of steps can be changed, and the responsiveness to the change in the operating state can be further enhanced.

In addition, in the present embodiment, the input delay detection unit 102 detects a delay time (input-output time) for each second by using a User Input Delay function that detects a delay time (input-output time) of an OS (for example, Windows (registered trademark)).

Accordingly, since the laptop PC 1 according to the present embodiment uses the functions of the OS, the delay time (input-output time) can be easily detected with a simple configuration, and an appropriate state in which a balance between performance and power consumption is achieved can be realized with a simpler configuration.

In addition, in the present embodiment, the power control unit 103 controls the limit value of the power consumption by changing, as the power control parameter, PL1 (Power Limit 1), which is the limit value of the rated power of the processor constituting the main control unit 10.

Accordingly, the laptop PC 1 according to the present embodiment can control the limit value of the power consumption (power limit value) easily and appropriately with a simpler configuration, by using PL1 as the power control parameter.

In addition, the control method according to the present embodiment is a control method of the laptop PC 1 including the input unit 32 that receives input from a user and the main control unit 10 that executes the information processing such that the set limit value of the power consumption (power limit value) is not exceeded, and includes an input delay detection step and a power control step. In the input delay detection step, the input delay detection unit 102 detects a delay time (input-output time) from the input received by the input unit 32 to the output to the display unit 14. In the power control step, the power control unit 103 controls the limit value of the power consumption (power limit value) such that the delay time (input-output time) falls within a predetermined range (within the threshold value range RG1) according to the delay time (input-output time) detected in the input delay detection step.

As a result, the control method according to the present embodiment exhibits the same effect as the above-described laptop PC 1, and enables the operation in an appropriate state in which a balance between performance and power consumption is achieved (for example, a state of the range BRG1 in FIG. 8).

The present invention is not limited to each of the above-described embodiments and can be modified without departing from the spirit of the present invention.

For example, in the above-described embodiment, the example in which the information processing apparatus is the laptop PC 1 has been described, but the present invention is not limited to this, and for example, another information processing apparatus such as a tablet terminal device or a desktop PC may be used.

In addition, in the above-described embodiment, the example in which the power control unit 103 controls, as the power control parameter, the limit value of the power consumption (power limit value) by using PL1 has been described, but the present invention is not limited to this. The power control unit 103 may control the limit value of the power consumption (power limit value) by using any of, for example, PL1, Power Limit 2 (PL2), and Power Limit 4 (PL4), or a combination of some or all of these.

Here, PL1 is a threshold value that allows the power consumption of the CPU 11 to temporarily exceed this value, but limits the power consumption of the CPU 11 from exceeding the value continuously for a predetermined duration or longer. In addition, PL2 is a threshold value for limiting a short-term moving average value of the power consumption from exceeding the value. PL2 is also referred to as a short term power limit. In addition, PL4 corresponds to the instantaneous maximum power. PL4 is a threshold value that limits an instantaneous value of the power consumption of the CPU 11 from exceeding this value, even for a brief moment (for example, a short period of time of several tens of µs to several tens of ms). PL4 may have a significantly larger value than PL2 that is temporally smoothed.

In addition, the power control parameter may further include an energy performance preference (EPP). The EPP is a parameter related to a frequency behavior of the operating frequency of the CPU 11. The EPP is a parameter for instructing the CPU 11 to operate with higher performance as the set value decreases, and to operate with lower power consumption as the set value increases.

In addition, in the above-described embodiment, the example in which the power control unit 103 changes the limit value of the power consumption (power limit value) in a step (stage) unit has been described, but the present invention is not limited to this. For example, the limit value of the power consumption (power limit value) may be changed to any value.

In addition, in the above-described embodiment, the example in which the power control unit 103 changes the limit value of the power consumption (power limit value) in units of steps (stages) has been described, with changes made in units of one step, but the change may also be made by two or more steps.

In addition, the power control unit 103 may change the number of steps to be changed according to the degree of deviation of the delay time (input-output time) from the threshold value range RG1.

In addition, in the above-described embodiment, the example in which the number of steps (stages) of the limit value of the power consumption (power limit value) is five stages has been described, but the present invention is not limited to this, and the number of steps (stages) may be four stages or less or six stages or more.

Each configuration of the laptop PC 1 described above includes a computer system therein. Then, a program for realizing the functions of each configuration included in the laptop PC 1 described above may be recorded on a computer-readable recording medium, and the program recorded on the recording medium may be read into the computer system and executed to perform the processing in each configuration included in the laptop PC 1 described above. Here, "the program recorded on the recording medium may be read into the computer system and executed" includes installing the program in the computer system. The "computer system" referred to here includes hardware such as an OS and peripheral devices.

In addition, the term "computer system" may include a plurality of computer devices connected via a network including a communication line such as the Internet, WAN, LAN, or dedicated lines. In addition, the term "computer-readable recording medium" refers to a storage device such as a portable medium such as a flexible disk, a magnetooptical disk, a ROM, or a CD-ROM, or a hard disk incorporated in a computer system. As described above, the recording medium on which the program is stored may be a non-transitory recording medium such as a CD-ROM.

In addition, the recording medium also includes a recording medium provided internally or externally, which is accessible from a distribution server in order to distribute the program. The program may be divided into a plurality of parts, which are downloaded at different timings and then combined by each configuration included in the laptop PC 1, or distribution servers that distribute each of the divided programs may be different. Further, the term "computer-readable recording medium" includes a medium that holds a program for a certain period of time, such as a volatile memory (RAM) inside a computer system that is a server or a client in a case where a program is transmitted via a network. In addition, the program described above may be for realizing a part of the above-described functions. Further, the above-described functions may be realized in combination with programs already recorded in the computer system, which is a so-called differential file (differential program).

In addition, some or all of the above-described functions may be realized as an integrated circuit such as a large scale integration (LSI). Each of the above-described functions may be processed individually by a processor, or some or all of the functions may be integrated and processed by a processor. In addition, the method of integrating the circuits is not limited to the LSI, and may be realized by a dedicated circuit or a general-purpose processor. In addition, in a case where the integrated circuit technology has appeared as a substitute for LSI due to the advancement of semiconductor technology, an integrated circuit using the technology may be used.

### Description of Symbols

- 1: laptop PC
- 10: main control unit
- 11: CPU
- 12: main memory
- 13: video subsystem
- 14: display unit
- 21: chipset
- 22: BIOS memory
- 23: SSD
- 24: audio system
- 25: WLAN card
- 31: embedded controller (EC)
- 32: input unit
- 33: power supply circuit
- 34: battery
- 35: heat dissipation fan
- 36: temperature sensor
- 40: storage unit
- 41: power limit setting storage unit
- 42: step setting storage unit
- 101: OS processing unit
- 102: input delay detection unit
- 103: power control unit

## Claims

1. An information processing apparatus comprising:
an input unit configured to receive input from a user;
a main control unit configured to execute information processing such that a set limit value of power consumption is not exceeded;
an input delay detection unit configured to detect a delay time from the input received by the input unit to output to a display unit; and
a power control unit configured to control the limit value of the power consumption such that the delay time falls within a predetermined range according to the delay time detected by the input delay detection unit.

2. The information processing apparatus according to claim 1,
wherein the limit value of the power consumption is settable in a plurality of stages, and
the power control unit is configured to change the stage of the limit value of the power consumption according to the delay time and control the limit value of the power consumption.

3. The information processing apparatus according to claim 2,
wherein the power control unit is configured to
change the stage in a direction of decreasing the limit value of the power consumption in a case where the delay time is faster than the predetermined range, and
change the stage in a direction of increasing the limit value of the power consumption in a case where the delay time is slower than the predetermined range.

4. The information processing apparatus according to claim 2 or 3,
wherein the power control unit is configured to change the number of stages to be changed according to a degree to which the delay time is out of the predetermined range.

5. The information processing apparatus according to any one of claims 1 to 3,
wherein the input delay detection unit is configured to detect the delay time for each second by using a User Input Delay function of an operating system, OS, that detects the delay time.

6. The information processing apparatus according to any one of claims 1 to 3,
wherein the power control unit is configured to control the limit value of the power consumption by changing, as a power control parameter, Power Limit 1, PL1, which is a limit value of rated power of a processor constituting the main control unit.

7. A control method of an information processing apparatus including an input unit configured to receive input from a user and a main control unit configured to execute information processing such that a set limit value of power consumption is not exceeded, the control method comprising:
detecting a delay time from the input received by the input unit to output to a display unit, by an input delay detection unit; and
controlling the limit value of the power consumption such that the delay time falls within a predetermined range according to the detected delay time, by a power control unit.

8. The control method according to claim 7,
wherein the limit value of the power consumption is settable in a plurality of stages, and the method comprises
changing the stage of the limit value of the power consumption according to the delay time and controlling the limit value of the power consumption.

9. The control method according to claim 8, comprising
changing the stage in a direction of decreasing the limit value of the power consumption in a case where the delay time is faster than the predetermined range, and
changing the stage in a direction of increasing the limit value of the power consumption in a case where the delay time is slower than the predetermined range.

10. The control method according to claim 8 or 9, comprising
changing the number of stages to be changed according to a degree to which the delay time is out of the predetermined range.

11. The control method according to any one of claims 8 to 10, comprising
detecting the delay time for each second by using a User Input Delay function of an operating system, OS, that detects the delay time.

12. The control method according to any one of claims 8 to 10, comprising
controlling the limit value of the power consumption by changing, as a power control parameter, Power Limit 1, PL1, which is a limit value of rated power of a processor constituting the main control unit.
